# EUROPÄISCHE PATENTANMELDUNG

(11) **EP 1 211 629 A2**
(43) Veröffentlichungstag der Anmeldung: **05.06.2002**
(21) Anmeldenummer: 01125095.8
(22) Anmeldetag: 23.10.2001
(51) Int. Cl.: G06K 1/12

(54) **Verfahren sowie Anlage zur Beschriftung von Paletten**

(30) Priorität: 02.11.2000 DE 10054291
(71) Anmelder: Olbort, Tobias, 63937 Weilbach-West (DE)
(72) Erfinder: Olbort, Tobias, 63937 Weilbach-West (DE)
(74) Vertreter: Pöhner, Wilfried Anton, Dr.

(57) **Zusammenfassung**

Bei einem Verfahren zur Beschriftung von Ladehilfsmitteln aus Holz durch Einbrennen des Schriftzuges unter Verwendung einer Förderstrecke und einer Beschriftungsvorrichtung mit Schreibkopf werden folgende Verfahrensschritte vorgeschlagen:
- Eingabe des Beschriftungstextes in die Beschriftungsvorrichtung mittels einer Eingabeeinheit
- Speicherung des eingegebenen Beschriftungstextes in einer Speichereinheit des Beschriftungsvorrichtung
- Transport der Ladehilfsmittel oder eines Teiles zur Beschriftungsvorrichtung durch die Förderstrecke
- Positionierung des Schreibkopfes relativ zum Ladehilfsmittel oder Teil
- Umwandlung des gespeicherten Schriftzuges in entsprechende Signale zur Bewegungen des Schreibkopfes
- Einbrennen einer dem Beschriftungstext entsprechenden Spur mittels eines aus dem Schreibkopf austretenden Laserstrahls, vorzugsweise eines CO₂-Lasers.

Eine Anlage zur Durchführung dieser Verfahrensschritte wird ebenfalls vorgeschlagen.

## Beschreibung

Die Erfindung bezieht sich auf ein Verfahren sowie eine Anlage zur Beschriftung von Ladehilfsmitteln aus Holz, vorzugsweise Paletten, durch Einbrennen des Schriftzuges unter Verwendung einer Förderstrecke und einer Beschriftungsvorrichtung mit Schreibkopf.

Zu den wichtigsten Ladehilfsmitteln, die sowohl einen rationellen Transport als auch eine optimale Lagerung von Gütern ermöglichen, zählt die Palette. Je nach Einsatzzweck kommen unterschiedliche Ausführungsformen zur Anwendung, wie Flachpaletten, Flachpaletten mit Aufsetzrahmen, Gitterboxpaletten, Faß- oder Rungenpaletten. In der Regel weisen Paletten eine Beschriftung auf, insbesondere dann, wenn die Paletten wieder verwendbar ausgebildet sind.

Bei wieder verwendbaren Paletten lassen sich die Vorteile der Palette als Transport- und Lagereinheit voll nutzen. In diesem Fall können die Paletten unter den Teilnehmern der Logistikkette - Hersteller, Großhändler, Spediteur und Verbraucher - weitergereicht werden. Der jeweilige Eigentümer einer Palette erhält nicht seine individuelle Palette vom Empfänger der palettierten Waren zurück, sondern nur eine gleichartige Palette. Durch diesen Austausch einer vollen Palette gegen eine leere wird eine weitgehend ununterbrochene Transportkette sichergestellt und unnötige Rücktransporte von Leerpaletten werden vermieden.

Dieses Tauschverfahren ist unter dem Namen Palettenpool-Verfahren bekannt. Voraussetzung für das Funktionieren dieses Verfahrens ist die Verwendung eines einheitlichen, genormten Palettentyps. Beim europäischen Palettenpool, der im Jahr 1961 durch den internationalen Eisenbahnverband gegründet wurde, findet die unter dem Namen DIN-Palette, Euro-Palette, Pool-Palette oder Tausch-Palette bekannte Flachpalette Anwendung. Paletten der genannten Art erfüllen besondere Anforderungen, wie z.B. Maßhaltigkeit, die den Einsatz in automatisch betriebenen Hochregallagern sicherstellen, oder beispielsweise eine verbürgte Tragfähigkeit von einer Tonne.

Jede Euro-Palette ist in einheitlicher Form beschriftet. Die Beschriftung weist die Palette als Euro-Palette aus und ist Garantie für die Einhaltung der geforderten Anforderungen. So tragen Paletten des genannten Typs z.B. auf dem rechten Eckklotz beider Längsseiten das Zeichen EUR, auf dem linken Eckklotz beider Längsseiten das DB-Zeichen der Eisenbahn, in deren Bereich die Palette hergestellt wurde, am mittleren Klotz beider Längsseiten das RAL-RG 993-Gütezeichen mit Betriebsnummer des Herstellers und das Herstelldatum.

Die Beschriftung wird durch Einbrennen in die Oberfläche der aus Holz hergestellten Paletten vorgenommen.

Bei bekannten Anlagen zur Beschriftung von Paletten durch Einbrennen wird der Schriftzug mit einer Vorrichtung auf der Palette angebracht, deren Schreibkopf eine Matrize enthält. Die Matrize ist aus Metall ausgebildet und trägt den spiegelbildlich wiedergegebenen Schriftzug. Der Schreibkopf ist mit - i.d.R. elektrischen - Heizelementen ausgestattet, welche die Matrize auf eine Temperatur von etwa 600 Grad Celsius aufheizen.

Bei der Beschriftung der Paletten mit vorgenannten Anlagen werden im einzelnen folgende Verfahrensschritte angewendet:
- Auswahl der geeigneten Matrize aus einem Vorrat von Matrizen bzw. Herstellung der Matrize mit dem gewünschten Schriftzug
- Anbringen der Matrize auf dem Schreibkopf
- Aufheizen des Schreibkopfes auf die erforderliche Temperatur
- Transport der Palette zur Beschriftungsvorrichtung mittels Förderstrecke
- Anhalten der Palette an der Beschriftungsvorrichtung
- Anpressen des Schreibkopfes auf die beschriftenden Stelle der Palette
- Abheben des Schreibkopfes
- ggf. Wiederholung der letzten vier Verfahrensschritte bei Beschriftung weitere Stellen der Palette mit dem gleichen Schriftzug
- Weitertransport der beschrifteten Palette
- ggf. Wiederholung aller Schritte bei Beschriftung der Palette mit einem anderen Schriftzug

Mit der Durchführung dieser Verfahrensschritte ist ein relativ großer Zeitaufwand verbunden, insbesondere beim Aufheizen, Anpressen und Abheben des Schreibkopfes und dem Anhalten der Paletten während der Beschriftung. Erheblich ist auch der Nachteil, der durch die Wartezeit nach erfolgter Beschriftung entsteht. Diese Wiederaufheizzeit, innerhalb der die Matrize wieder die vorgeschriebene Temperatur erreicht, ist vergleichbar mit den Zeiten der o.g. Verfahrensschritte. Insgesamt ergibt die Summe der Zeiten aller für die Beschriftung notwendigen Verfahrensschritte einen Wert, der größer ist als die realisierbaren Taktfrequenzen von Fertigungsanlagen. Die für die Beschriftung nach dem Stand der Technik notwendige Zeit begrenzt daher die Fertigungsgeschwindigkeit der Paletten in heutigen Fertigungsanlagen.

Zu den Nachteilen des genannten Verfahrens zur Beschriftung von Paletten gehört insbesondere auch die Inflexibilität. Für jeden neuen Schriftzug ist die Herstellung einer eigenen Matrize erforderlich, für jede Umstellung des Schreibkopfes auf einen bereits vorhandenen Schriftzug die Montage einer anderen Matrize auf dem Schreibkopf.

Bei Beschriftung von verschiedenen Teilen der Palette mit unterschiedlichen Schriftzügen, muß das Verfahren mit allen Verfahrensschritten ein weiteres Mal angewendet werden, entweder bei einem neuen Durchgang der teilbeschrifteten Paletten oder durch eine zweite in der Anlage vorgesehene Beschriftungsvorrichtung.

Als Nachteil einer mit Schreibkopf und Matrize arbeitenden Anlage ist auch anzusehen, daß diese Teile der Anlage dem Verschleiß unterliegen. Durch Verzundern der Matrizen wird dabei sowohl die Temperaturleitfähigkeit des Schreibkopfes herabgesetzt und damit die Wiederaufheizzeit vergrößert, als auch die Lebensdauer der Matrize vermindert. Technisch aufwendig und daher von Nachteil ist auch die Einrichtung zur Steuerung der Vorgänge Anpressen und Abheben des Schreibkopfes an bzw. von der Palette. Da diese Vorgänge mechanische Bewegungen von Teilen der Anlage umfassen, sind auch diese Teile dem Verschleiß ausgesetzt.

Vor diesem Hintergrund hat sich die Erfindung die Aufgabe gestellt, ein Verfahren anzugeben, durch welche die Beschriftung von Paletten in Zeitintervallen erfolgt, die kleiner als die realisierbaren Taktfrequenzen heutiger Fertigungsanlagen sind. Darüber hinaus ermöglicht das vorgeschlagene Verfahren eine wesentlich größere Flexibilität bei der Beschriftung einer Palette mit unterschiedlichen Schriftzügen. Weiterhin wird bei vorliegender Erfindung eine Anlage zur Durchführung der vorgeschlagenen Verfahrensschritte angegeben, die hohe Geschwindigkeiten bei der Beschriftung erlaubt und einem erheblich geringerem Verschleiß unterliegt als bekannte Anlagen.

Die gestellte Aufgabe wird erfindungsgemäß durch ein Verfahren mit folgenden Verfahrensschritten gelöst:
- Eingabe des Beschriftungstextes in die Beschriftungsvorrichtung mittels einer Eingabeeinheit
- Speicherung des eingegebenen Beschriftungstextes in einer Speichereinheit des Beschriftungsvorrichtung
- Transport der Ladehilfsmittel oder eines Teils zur Beschriftungsvorrichtung durch die Förderstrecke
- Positionierung des Schreibkopfes relativ zum Ladehilfsmittel oder Teil
- Umwandlung des gespeicherten Schriftzuges in entsprechende Signale zur Bewegungen des Schreibkopfes
- Einbrennen einer dem Beschriftungstext entsprechenden Spur mittels eines aus dem Schreibkopf austretenden Laserstrahls, vorzugsweise eines CO₂-Lasers.

Zur Vorbereitung der Beschriftung wird der gewünschte Schriftzug in die Beschriftungsvorrichtung eingegeben und in einer Speichereinheit der Beschriftungsvorrichtung in digitaler Form abgelegt. Die Eingabeeinheit ist zweckmäßigerweise als Tastatur ausgebildet, während die Speichereinheit aus einem Kleinrechner, beispielsweise einem PC, oder Prozessrechner besteht. Die über die Tastatur eingegebenen Schriftzüge können an einer Anzeigeeinheit, zweckmäßigerweise einem Bildschirm, zur Anzeige gebracht werden. In der Regel ist im Speicher auch eine Software hinterlegt, mit deren Hilfe die Schriftzüge, wie aus Textverarbeitungssystemen bekannt, in weiten Grenzen optisch gestaltet werden können.

Damit reduziert sich der Aufwand zur Vorbereitung einer Palettenbeschriftung ganz drastisch. Während diese Verfahrensschritte bei bekannten Verfahren in der Herstellung bzw. Auswahl und Befestigung einer Matrize am Schreibkopf bestehen, sind bei dem Verfahren gemäß vorliegender Erfindung zur Durchführung dieser Schritte lediglich Eingaben auf einer Tastatur erforderlich.

Nach dem Transport der Palette oder eines Teiles hiervon während des Herstellungsprozesses zur Beschriftungsvorrichtung mittels der Förderstrecke wird der Schreibkopf an der zur Beschriftung vorgesehenen Stelle positioniert. Mit Hilfe des in der Beschriftungsvorrichtung enthaltenen Rechners und einer entsprechenden Steuerungssoftware wird dann der gespeicherte Schriftzug in entsprechende Signale zur Bewegungen des Schreibkopfes umgewandelt, welche an die Stellglieder des Schreibkopfes weitergegeben werden. Der Schreibkopf führt daraufhin Bewegungen aus, die exakt dem abgespeicherten Schriftzug entsprechen, wobei die Größe des Schriftzuges durch Eingabe der entsprechenden Parameter an die Steuerungssoftware vorgebbar ist.

Die eigentliche Beschriftung erfolgt durch das Einbrennen einer Spur, die ein aus dem Schreibkopf austretender Laserstrahl, vorzugsweise eines CO₂-Lasers, bei seiner Bewegung über die zu beschriftende Stelle der Palette hinterläßt. Schriftbreite und Einbrenntiefe werden durch die mittlere Verweilzeit des Laserstrahls auf einem Punkt des Schriftfeldes, d.h. die Schreibgeschwindigkeit, oder durch eine Strahlaufweitung mittels optischer Linsen vorgegeben. Die Leistung der abgestrahlten Laserstrahlung beim vorgeschlagenen Verfahren liegt in einer Größenordnung zwischen 25 und 500 Watt. Sie bestimmt die Schreibgeschwindigkeit, wobei umso höhere Schreibgeschwindigkeiten vorgebbar sind, je höher diese Leistung ist. Der Zeitpunkt der Aufbringung der Beschriftung während des Herstellungsprozesses ist beliebig. So ist es möglich, die Palette in ihrem fertig gestellten Zustand und damit als letzten Arbeitsschritt zu beschriften. Als Alternative hierzu kann während oder gar vor Beginn der Herstellung die Schrift auf einzelnen Teilen der späteren Palette aufgebracht werden.

Da bei dem Verfahren gemäß vorliegender Erfindung ein Aufheizen von Teilen des Schreibkopfes gänzlich entfällt, sind auch die mit diesem Vorgang verbundenen Nachteile, wie Aufheizzeit, Wiederaufheizzeit und Verzundern der Matrize von vorne herein eliminiert.

Bei dem Verfahren gemäß der Erfindung erfolgt die Beschriftung des Ladehilfsmittels berührungslos. Das bringt den Vorteil mit sich, daß auch unebene oder relativ zur Beschriftungsvorrichtung verkantete Flächen ohne Probleme beschriftet werden können. Darüber hinaus entfallen die Vorgänge Anpressen und Abheben des Schreibkopfes an bzw. von der Palette. Durch den Wegfall der mechanischen Bewegungsvorgänge wird der Verschleiß dieser Teile der Anlage weiter reduziert.

Bei einer vorteilhaften Variante des vorgeschlagenen Verfahrens besteht der in die Beschriftungsvorrichtung eingegebene Beschriftungstext aus mehreren Schriftzügen, wobei die einzelnen Schriftzüge an verschiedenen Stellen des Ladehilfsmittels angebracht werden.

Bei dieser Variante zeigen sich die durch das erfindungsgemäße Verfahren erreichten Vereinfachungen in eindrucksvoller Weise. Anstelle einer Herstellung oder Auswahl von Matrizen mit unterschiedlichen Schriftzügen, werden die einzelnen Schriftzüge lediglich, wie beschrieben, über die Tastatur in die Beschriftungsvorrichtung eingegeben, ggf. optisch gestaltet und im Speicher der Beschriftungseinheit abgelegt. Beim Anbringen der einzelnen Schriftzüge wird in der Regel so verfahren, daß alle auf der gleichen Seite der Palette liegenden zu beschriftenden Stellen sequentiell hintereinander durch einen Schreibkopf abgearbeitet werden. Dabei ist es aus Sicht des technischen Aufwandes beim vorgeschlagenen Verfahren im Gegensatz zu herkömmlichen Verfahren völlig nebensächlich, ob die an unterschiedlichen Stellen der Palette anzubringenden Beschriftungen aus gleichen oder von einander verschiedenen Schriftzügen bestehen. Der Wechsel zwischen verschiedenen Schriftzügen bringt beim vorgeschlagen Verfahren keinerlei Aufwand mit sich. Hierbei wird lediglich der entsprechende, in der Speichereinheit der Beschriftungsvorrichtung abgelegte Schriftzug aufgerufen und mit Hilfe des Laserstrahls auf der Holzfläche des Ladehilfsmittels eingebrannt. Ein beim herkömmlichen Verfahren notwendiger zweiter Palettendurchgang zum Aufbringen des zweiten Schriftsatzes oder die Verwendung eines weiteren Schriftkopfes für die Beschriftung mit dem zweiten Schriftsatz entfällen beim vorliegenden Verfahren.

Die hierdurch gewonnene Flexibilität erlaubt es ohne Mehraufwand vielfältige Texte, beispielsweise Chargennummern, fortlaufende Nummern, Barcodes oder auch Texte zur Kennzeichnung der zu transportierenden Waren, auf dem Ladehilfsmittel anzubringen oder kurzfristig auf besondere Kundenwünsche zur Kennzeichnung der Paletten einzugehen.

Bei einer vorteilhaften Variante des erfindungsgemäßen Verfahrens werden die an verschiedenen Stellen des Ladehilfsmittels anzubringenden Schriftzüge gleichzeitig geschrieben. Die Hierfür eingesetzte Anlage weist ebenso viele Schreibköpfe wie zu beschriftende Stellen auf. Die Dauer für die Anbringung aller Schriftzüge an den verschiedenen Stellen einer Palette wird hierdurch auf die Schreibdauer eines Schriftzuges reduziert.

Während des Beschriftungsvorganges ist es notwendig, daß die Palette relativ zum Schreibkopf ruht. Im allgemeinen wird dies dadurch erreicht, daß die Palette während des Schreibvorganges auf der Förderstrecke angehalten wird und die Beschriftung von einem ortsfesten Schreibkopf durchgeführt wird. Die Dauer des Stillstands der Palette ist bei dem vorgeschlagenen Verfahren jedoch wesentlich kleiner als die realisierbaren Taktzeiten bei der Palettenfertigung.

Bei einer vorteilhaften Weiterbildung der Erfindung erfolgt das Anbringen des Beschriftungstextes an einer in Bewegung befindlichen Palette. In diesem Fall wird der oder die Schreibköpfe während der Beschriftung synchron zur der bewegten Palette mitgeführt. Dadurch erübrigt sich ein Anhalten der Paletten, die Dauer der Beschriftung ist in diesem Fall ohne jeden Einfluß auf Taktzeiten der Palettenfertigung.

Bei dem Verfahren, den Palettenkopf mit der bewegten der Paletten mitzuführen, läßt sich eine vorteilhafte Variante angeben. Bei dieser Variante sind die Paletten zur Anbringung der Beschriftung hochkant gestellt. Da beim Übergang von liegend transportierten Paletten zu hochkant transportierten Paletten die Transportgeschwindigkeit der Förderstrecke entsprechend der höheren Packungsdichte der Paletten wesentlich geringer ist, bleiben die Wege der Paletten während der Beschriftung relativ klein. Dementsprechend klein ist daher auch der Mitführbereich des Schreibkopfes ausgebildet.

Weitere Einzelheiten, Merkmale und Vorteile der Erfindung lassen sich dem nachfolgenden Teil der Beschreibung entnehmen. In diesem Teil wird ein Ausführungsbeispiel für eine Anlage zur Beschriftung von Ladehilfsmitteln anhand von Zeichnungen näher erläutert.

Die Zeichnungen zeigen in schematischer Darstellung:
- Figur 1a:: Seitenansicht der Anlage
- Figur 1b:: Aufsicht auf die Anlage
- Figur 2:: Die wesentlichen Komponenten des Schreibkopfes
- Figur 3:: Vorteilhafte Variante des Palettentransportes bei synchron mit der Bewegung der Paletten mitgeführtem Schreibkopf

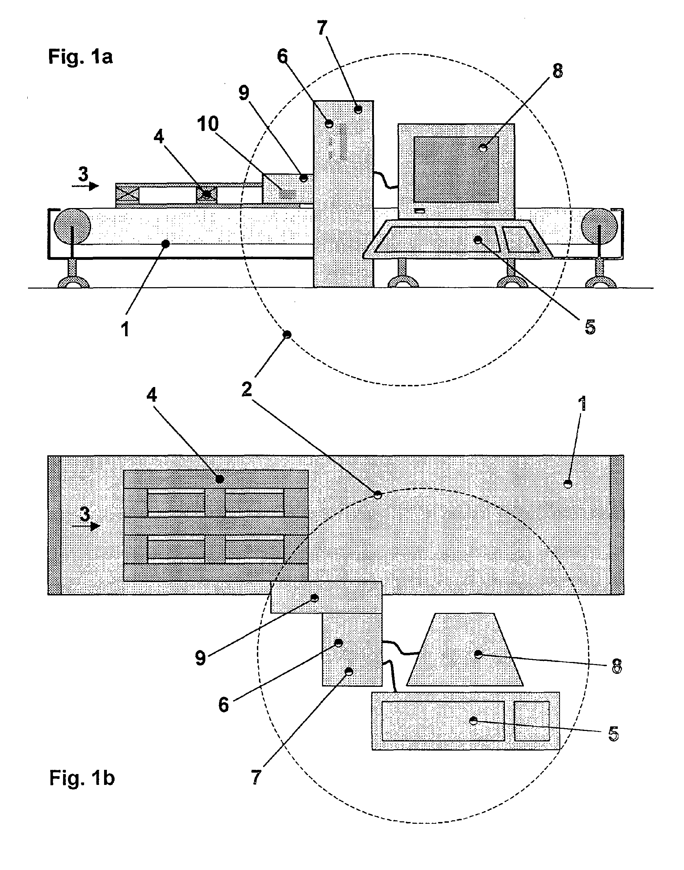

Die in Figur 1a und 1b wiedergegebene Anlage besteht aus einer Förderstrecke (1) und einer Beschriftungsvorrichtung (2), welche an der Förderstrecke installiert ist. Die Transportrichtung der Förderstrecke ist durch das Bezugszeichen (3) gekennzeichnet. Mit Hilfe der Förderstrecke werden die Paletten (4) der Beschriftungsvorrichtung zugeführt. Die Beschriftungsvorrichtung weist eine Eingabeeinheit (5) auf, die als Tastatur ausgebildet ist, und einen Prozessrechner (6) mit Speichereinheit (7). Über die Tastatur wird der Beschriftungstext in die Anlage eingegeben und in der Speichereinheit in digitaler Form abgelegt.

Der eingegebene Beschriftungstext läßt sich an einem Bildschirm (8) zur Anzeige bringen. Mit einer In der Speichereinheit hinterlegten Software können die gespeicherten Schriftzüge, wie aus Textverarbeitungssystemen bekannt, in weiten Grenzen optisch gestaltet werden, bevor sie zur Beschriftung freigegeben werden. Die Beschriftung wird mittels des Schreibkopfes (9) an der Palette angebracht. Das durch den Schreibkopf verdeckte Schriftfeld am Palettenfuß ist mit dem Bezugszeichen (10) gekennzeichnet.

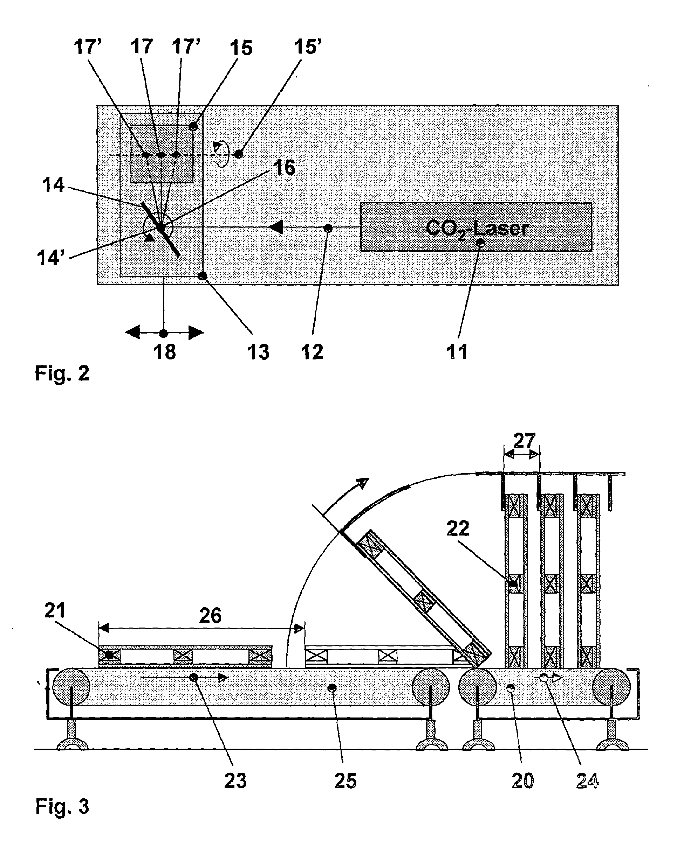

Einzelheiten des Schreibkopfes sind in Figur 2 wiedergegeben. Der Schreibkopf enthält einen CO₂-Laser (11) mit einer Leistung zwischen 25 und 500 Watt. Der durch diesen Laser erzeugte Strahl (12) wird durch eine Ablenkeinrichtung (13) in zwei zueinander senkrechten Koordinatenrichtungen abgelenkt. In dem vorliegenden Ausführungsbeispiel erfolgt die Ablenkung mittels zweier Spiegel (14) und (15), die jeweils um eine Achse (14') und (15') schwenkbar ausgebildet sind. Beide Achsen stehen senkrecht zueinander, wobei in dem skizzierten Beispiel die Achse (14') senkrecht zur Zeichenebene, die Achse (15') in der Zeichenebene liegend angenommen ist.

Wenn beide Spiegel unverschwenkt in Ausgangsstellung stehen, wird der vom Laser kommende Laserstrahl vom Auftreffpunkt (16) auf dem ersten Spiegel (14) zum Punkt (17) auf dem zweiten Spiegel (15) reflektiert und verläßt senkrecht zur Zeichenebene - im skizzierten Beispiel in die hinter die Zeichenebene weisende Richtung - den Schreibkopf. Führen beide Spiegel dagegen eine Schwenkbewegung aus, trifft der Laserstrahl in einem vom Punkt (17) abweichenden Punkt(17') auf dem zweiten Spiegel auf und verläßt in einer Ebene, welche senkrecht zur Zeichenebene liegt und den Strahl (16→17') enthält, den Schreibkopf in einer von der Senkrechten zur Zeichenebene abweichenden Richtung.

Läßt man beim Verschwenken innerhalb eines definierten Winkelbereichs alle Zwischenwerte an Winkeleinstellungen für die beiden Spiegel zu, wird vom Laserstrahl auf der Palette eine Fläche überstrichen, welche der Größe des zu beschriftenden Feldes entspricht. Jeder Punkt in dieser Ebene entspricht einem bestimmten Wertepaar der Winkeleinstellung beider Spiegel.

Die Signale zum Verschwenken der beiden Spiegel werden durch den in der Beschriftungsvorrichtung enthaltenen Rechner ermittelt. Der Rechner ordnet dabei den einzelnen Rasterpunkten des gespeicherten Schriftzuges Winkeleinstellungen der beiden Spiegel zu und leitet die entsprechenden Signale zum Verschwenken der Spiegel an die Stellglieder der Spiegel weiter. Die beiden Spiegel bewegen dann den Laserstrahl so über das zu beschriftende Feld, wie durch den Schriftzug vorgegeben wird. Dabei wird auf Grund der hohen Leistungsdichte der Laserstrahlung auf der Palette eine dem vorgegebene Schriftzug entsprechende Spur eingebrannt

Bei einer Variante der vorgeschlagenen Anlage besteht der in die Beschriftungsvorrichtung eingegebene Beschriftungstext aus mehreren Schriftzügen, die an verschiedenen Stellen des Ladehilfsmittels anzubringen sind. Da die Vorgabe des jeweiligen Schriftzuges an den Schreibkopf durch den Rechner der Anlage erfolgt, sind hierbei keinerlei Eingriffe von außen notwendig. Es ist daher ohne jeden Mehraufwand möglich, auch von einer zur nächsten Beschriftungsstelle wechselnde Schriftzüge an den Paletten anzubringen.

In der skizzierten Ausführungsform werden die an verschiedenen Stellen der Palette anzubringenden Schriftzüge sequentiell hintereinander durch einen Schreibkopf geschrieben. Bei einer vorteilhaften Ausführungsform ist je ein Schreibkopf für die an verschiedenen Stellen einer Palette anzubringende Schriftzüge vorgesehen.

In einer weiteren vorteilhaften Variante wird der oder die Schreibköpfe während der Beschriftung synchron zur bewegten Palette mitgeführt. Bei dem in Figur 2 wiedergegebenen Schreibkopf ist anstelle einer Mitführung des kompletten Schreibkopfes eine Mitführung der Ablenkeinrichtung (13) vorgesehen, das Bezugszeichen (18) deutet diese Bewegung der Ablenkeinheit an. Durch die Mitführung des Ablenkeinheit erreicht man, daß die Relativbewegung zwischen Palette und Schreibkopf während des Schreibvorganges gleich Null ist, der Transport der Paletten jedoch mit unverminderter Geschwindigkeit weiter durchgeführt wird. Die Dauer der Beschriftung ist in diesem Fall ohne jeden Einfluß auf Taktzeiten der Palettenfertigung.

In Figur 3 ist eine vorteilhafte Variante des Palettentransportes für die Ausführungsform wiedergegeben, bei welcher der Schreibkopf (in Fig. 3 nicht abgebildet) synchron mit der Bewegung der Paletten mitgeführt wird. Bei dieser Variante ist die Förderstrecke (20) im Bereich der Beschriftungsvorrichtung so ausgebildet, daß die Paletten hochkant transportiert werden. Da beim Übergang von liegend transportierten Paletten (21) zu hochkant transportierten Paletten (22) die Transportgeschwindigkeiten (23) bzw. (24) der Förderstrecken (25) bzw. (20) sich wie die Packungsdichten (26) bzw. (27) der Paletten verhalten, weist die Förderstrecke (20) im Bereich der Beschriftungsvorrichtung eine wesentliche geringere Geschwindigkeit (24) auf. Daher bleiben die von einer Paletten während der Beschriftung zurückgelegten Wege relativ klein, dementsprechend klein ist auch der Mitführbereich des Schreibkopfes ausgebildet.

## Patentansprüche

1. Verfahren zur Beschriftung von Ladehilfsmitteln aus Holz, insbesondere Paletten, durch Einbrennen des Schriftzuges unter Verwendung einer Förderstrecke und einer Beschriftungsvorrichtung mit Schreibkopf, **gekennzeichnet durch** folgende Verfahrensschritte
- Eingabe des Beschriftungstextes in die Beschriftungsvorrichtung mittels einer Eingabeeinheit
- Speicherung des eingegebenen Beschriftungstextes in einer Speichereinheit des Beschriftungsvorrichtung
- Transport der Ladehilfsmittel oder eines Teiles zur Beschriftungsvorrichtung **durch** die Förderstrecke
- Positionierung des Schreibkopfes relativ zum Ladehilfsmittel oder Teil
- Umwandlung des gespeicherten Schriftzuges in entsprechende Signale zur Bewegungen des Schreibkopfes
- Einbrennen einer dem Beschriftungstext entsprechenden Spur mittels eines aus dem Schreibkopf austretenden Laserstrahls, vorzugsweise eines CO₂-Lasers.

2. Verfahren nach Anspruch 1, **dadurch gekennzeichnet, dass** der eingegebene Beschriftungstext aus mehreren Schriftzügen besteht und die einzelnen Schriftzüge verschiedenen Stellen des Ladehilfsmittels zugeordnet sind.

3. Verfahren nach Anspruch 2, **dadurch gekennzeichnet, dass** die Anbringung von Schriftzügen an verschiedenen Stellen des Ladehilfsmittels gleichzeitig erfolgt.

4. Verfahren nach einem der Ansprüche 1 - 3, **dadurch gekennzeichnet, dass** das Anbringen des Beschriftungstexts an einem in Bewegung befindlichen Ladehilfsmittel erfolgt.

5. Verfahren nach einem der Ansprüche 1 - 4, **dadurch gekennzeichnet, dass** das Ladehilfsmittel während der Anbringung des Beschriftungstextes hochkant gestellt ist.

6. Anlage zur Beschriftung von Ladehilfsmitteln aus Holz, insbesondere Paletten, durch Einbrennen des Schriftzuges nach einem der vorhergehenden Ansprüche mit einer Förderstrecke und einer Beschriftungsvorrichtung mit Schreibkopf, **dadurch gekennzeichnet, dass**
- die Beschriftungsvorrichtung an der Förderstrecke installiert ist
- die Beschriftungsvorrichtung
- eine Eingabeeinheit zur Eingabe des Beschriftungstextes
- eine Speichereinheit zur Hinterlegung des Beschriftungstextes
- und der Schreibkopf der Beschriftungsvorrichtung wenigstens einen Laser, vorzugsweise einen CO₂-Laser, aufweist.

7. Anlage nach Anspruch 6, **dadurch gekennzeichnet, dass** der eingegebene Beschriftungstext aus mehreren Schriftzügen besteht und die einzelnen Schriftzüge verschiedenen Stellen des Ladehilfsmittels zugeordnet sind.

8. Anlage nach Anspruch 7, **dadurch gekennzeichnet, dass** für die Anbringung von Schriftzügen an verschiedenen Stellen je ein Schreibkopf vorgesehen ist.

9. Anlage nach einem der Ansprüche 6 - 8, **dadurch gekennzeichnet, dass** der bzw. die Schreibköpfe synchron mit der bewegten Palette mitführbar ausgebildet sind.

10. Anlage nach einem der Ansprüche 6 - 9, **dadurch gekennzeichnet, dass** die Förderstrecke im Bereich der Beschriftungsvorrichtung für den Transport von hochkant stehender Paletten ausgebildet ist.
